# EUROPÄISCHE PATENTANMELDUNG

(11) **EP 2 835 448 A1**
(43) Veröffentlichungstag der Anmeldung: **11.02.2015**
(21) Anmeldenummer: 13179723.5
(22) Anmeldetag: 08.08.2013
(51) Int. Cl.: C25B 15/00, C25B 15/08, C25B 1/04, C25B 9/00, F25B 15/02

(54) **Elektrolyseanlage und Verfahren zum Betreiben einer Elektrolyseanlage**

(71) Anmelder: Siemens Aktiengesellschaft, 80333 München (DE)
(72) Erfinder: Herold, Jochen, 96260 Weismain (DE); Kautz, Martin, 91056 Erlangen (DE)

(57) **Zusammenfassung**

Eine Elektrolyseanlage (2) umfasst einen Elektrolyseur (4) zur Erzeugung von Wasserstoff und Sauerstoff, eine Abwärmeleitung (6) zum Abführen eines im Elektrolyseprozess erzeugten Abwärmestroms (A) aus dem Elektrolyseur (4), sowie einen Kühlkreislauf (7) mit einem Rückkühler (8, 9) zur Regulierung des Temperaturniveaus des Elektrolyseurs (4). Im Hinblick auf eine Erhöhung der Effizienz der Elektrolyseanlage (2) ist mindestens eine Absorptionskältemaschine (10) zur Erzeugung von einem Kältestrom (K) aus dem Abwärmestrom (A) an der Abwärmeleitung (6) angeordnet.

## Beschreibung

Die Erfindung betrifft eine Elektrolyseanlage umfassend einen Elektrolyseur zur Erzeugung von Wasserstoff und Sauerstoff, eine Abwärmeleitung zum Abführen eines im Elektrolyseprozess erzeugten Abwärmestroms aus dem Elektrolyseur, sowie einen Kühlkreislauf mit mindestens einem Rückkühler zur Regulierung des Temperaturniveaus des Elektrolyseurs.

Die Erfindung betrifft weiterhin ein Verfahren zum Betreiben einer solchen Elektrolyseanlage.

Wasserstoff wird heutzutage beispielsweise mittels PEM-Elektrolyse erzeugt. Bestandteil eines PEM-Elektrolyseurs ist eine protonendurchlässige Polymermembran (Proton-Exchange-Membrane), die auf beiden Seiten von porösen Platinelektroden (Anode und Kathode) kontaktiert wird. An diese wird eine äußere Spannung angelegt und auf der Anodenseite des Elektrolyseurs wird Wasser zugeführt. Durch die katalytische Wirkung des Platins wird das Wasser an der Anodenseite zersetzt. Es entstehen dabei Sauerstoff, freie Elektronen und positiv geladene Wasserstoffionen H⁺. Die Wasserstoffionen H⁺ diffundieren durch die protonenleitende Membran auf die Kathodenseite, wo sie mit den Elektronen aus dem äußeren Stromkreis zu Wasserstoffmolekülen H₂ kombinieren.

Die Zerlegung von Wasser zu Wasserstoff und Sauerstoff mittels Elektrolyse eröffnet die Möglichkeit überschüssigen Strom in Form von Wasserstoff oder Sauerstoff zu speichern. Die eingebrachte elektrische Energie findet sich nach der Umsetzung zum größten Teil in der chemischen Energie der Produkte Wasserstoff und Sauerstoff wieder. Jedoch entstehen im Elektrolyseprozess neben den Produkten Wasserstoff und Sauerstoff auch Verluste, die in Form von Reaktionswärme anfallen. In diesem Zusammenhang gilt es zu beachten, dass während der Elektrolyse erhebliche Mengen an elektrischer Energie in Wärmeenergie bzw. Abwärme umgewandelt werden, die zurzeit größtenteils ungenutzt abgeführt werden. Dies liegt vor allem daran, dass das Abwärmeangebot stark schwankend und auf relativ niedrigem Temperaturniveau von ca. 30°C-80°C vorliegt.

Aus der DE 10 2005 011 316 A1 ist es beispielsweise bekannt, die Wärme der im Elektrolyseur erzeugten Wasserstoff- und Sauerstoffströme an das für die Elektrolyse benötigte Wasser zum Vorwärmen abzugeben.

Der Erfindung liegt die Aufgabe zugrunde, die Effizienz einer Elektrolyseanlage zu erhöhen.

Die Aufgabe wird erfindungsgemäß gelöst durch eine Elektrolyseanlage der eingangs genannten Art, bei der mindestens eine Absorptionskältemaschine zur Erzeugung von einem Kältestrom aus dem Abwärmestrom an der Abwärmeleitung angeordnet ist.

Die Aufgabe wird weiterhin erfindungsgemäß gelöst durch ein Verfahren zum Betreiben einer derartigen Elektrolyseanlage, bei dem der Abwärmestrom einer Absorptionskältemaschine zugeführt wird und in der Absorptionskältemaschine ein Kältestrom erzeugt wird.

Die Erfindung basiert auf der Idee die Abwärme, die im Elektrolyseur bei der Umwandlung von elektrischer Energie in die Produkte Wasserstoff und Sauerstoff in Form von Reaktionswärme anfällt, zu nutzen, um Kälte bereitzustellen. Absorptionskältemaschinen haben den Vorteil, dass sie aus Abwärme auf relativ niedrigem Temperaturniveau (ca. 80°C) Kälte bereitstellen können. Diese Kälte kann in verschiedenen, an den Elektrolyseprozess gekoppelten oder separaten Anwendungen genutzt werden. Durch die in der Elektrolyseanlage integrierte Absorptionskältemaschine kann Kälte bzw. Klimatisierung zu geringen Preisen angeboten werden, wodurch der Gesamtwirkungsgrad der Elektrolyseanlage verbessert ist.

Gemäß einer bevorzugten Ausgestaltung ist der in der Absorptionskältemaschine erzeugte Kältestrom über eine Kälteleitung mit dem Elektrolyseur strömungstechnisch gekoppelt. Hierbei wird die aus der Reaktionswärme des Elektrolyseprozesses generierte Kälte wenigstens anteilig in den Elektrolyseur zurückgeführt, um diesen im Betrieb zu kühlen. Aufgrund der Kühlung verkraftet der Elektrolyseur problemlos für einige Zeit bis zum dreifachen seiner Nennleistung. Insbesondere wenn die Elektrolyseanlage in einer heißen Umgebung betrieben wird (z.B. in den Golfstaaten) kann durch die Rückführung des Kältestroms zum Elektrolyseur der Betrieb und die Sicherheit beim Herstellen vom Wasserstoff verbessert werden. Hierbei erfolgt zudem eine Selbstregelung des Kältebedarfs für die Elektrolyseanlage, denn je mehr Abwärme im Elektrolyseur entsteht, desto mehr Kältestrom generiert wird, der in die Elektrolyseanlage zum Kühlen des Elektrolyseurs zurückgeführt wird.

Nach einer bevorzugten Variante ist der Kältestrom mit dem Kühlkreislauf des Elektrolyseurs strömungstechnisch verbunden. Da der Elektrolyseur selbst einen Kühlkreislauf aufweist, ein Teil von dem der Rückkühler ist, ist aus technischer Sicht am einfachsten, die in der Absorptionskältemaschine erzeugte Kälte in den Kühlkreislauf des Elektrolyseurs zurückzuführen.

Nach einer weiteren bevorzugten Variante weist der Kühlkreislauf einen weiteren Rückkühler auf. Der zusätzliche Rückkühler ist mit dem Kältestrom aus der Absorptionskältemaschine strömungstechnisch verbunden. Der weitere Rückkühler ist insbesondere ein Rückkühler der Absorptionskältemaschine. Der wesentliche Vorteil hierbei ist, dass der erste Rückkühler, der ohnehin in der Elektrolyseanlage vorhanden ist, lediglich zum Abdecken einer Kühlgrundlast verwendet wird, während der zusätzliche Rückkühler die Kühlspitzen abdecken kann. Durch die gegenseitige Ergänzung beider Rückkühler ist es somit möglich, den ursprünglichen Rückkühler des Elektrolyseurs klein und kostengünstig auszulegen. Möglich ist auch beide Rückkühler zu einem kombinierten Rückkühler zusammenzufassen.

Im Hinblick auf eine möglichst effiziente Nutzung der Abwärme ist vorgesehen, dass möglichst wenige Wärmeübergänge stattfinden. Hierbei ist bevorzugt der Abwärmestrom durch Prozesswasser aus dem Elektrolyseur gebildet. Prozesswasser kann zum Beispiel voll entsalztes Wasser (Deionat) sein, das prozessbedingt einen hohen Anteil an Gas, hier vor allem Wasserstoff, mitführt. Somit wird der primäre Abwärmeträger das überschüssige Prozesswasser aus dem Elektrolyseur, selbst in die Absorptionskältemaschine eingeleitet.

Zweckdienlicherweise beträgt der Abwärmestrom aus dem Elektrolyseur eine Temperatur zwischen 60°C und 80°C. Dieses Temperaturniveau ist ausreichend, um mittels der Absorptionskältemaschine einen Kältestrom zu erzeugen.

Vorzugsweise beträgt der Kältestrom nach der Absorptionskältemaschine eine Temperatur im Bereich 5°C bis 15°C. Sie liegt damit unterhalb der Umgebungstemperatur von ca. 20°C.

Ein Ausführungsbeispiel der Erfindung wird anhand einer Zeichnung näher erläutert. Hierin zeigen schematisch und stark vereinfacht:
- FIG 1: eine erste Ausführungsvariante einer Elektrolyseanlage mit einer integrierten Abwärmenutzung, und
- FIG 2: eine zweite Ausführungsvariante einer Elektrolyseanlage mit einer integrierten Abwärmenutzung.

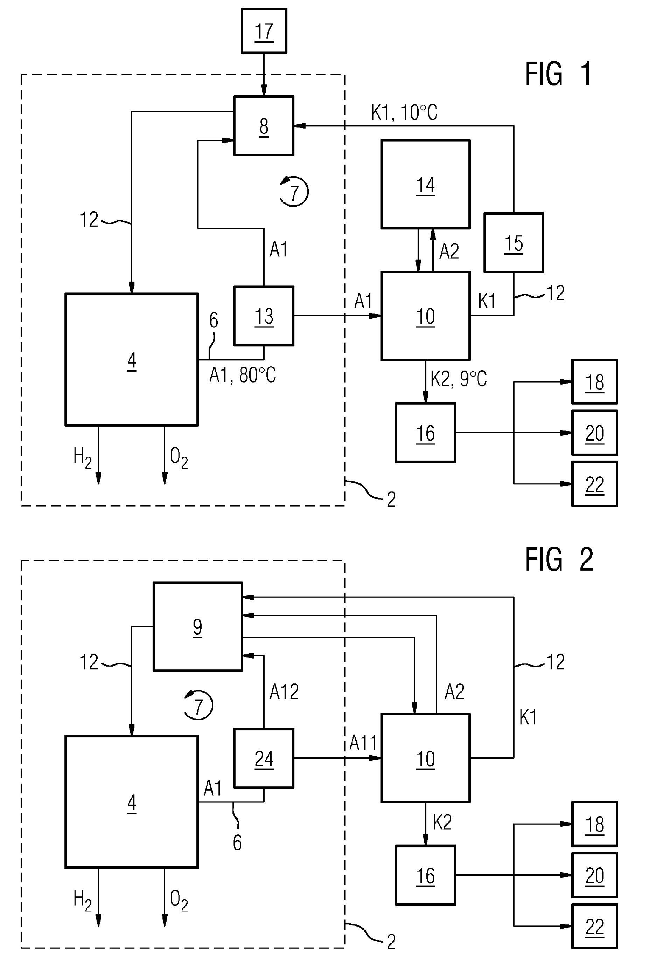

In FIG 1 ist eine Elektrolyseanlage 2 gezeigt, welche durch eine gestrichelte Linie angedeutet ist. Die Elektrolyseanlage 2 umfasst einen Elektrolyseur 4, in dem aus Wasser Wasserstoff H2 und Sauerstoff 02 erzeugt werden. Der Elektrolyseur 4 ist beispielsweise ein sogenannter PEM-Elektrolyseur. Bei der Zerlegung von Wasser zu Wasserstoff H2 und Sauerstoff 02 fällt im Elektrolyseprozess Reaktionswärme an, welche mit Hilfe eines überschüssigen Prozesswassers aus dem Elektrolyseur 4 hinausgeleitet wird, um einen sicheren und einwandfreien Betrieb des Elektrolyseurs 4 zu gewährleisten. Das Prozesswasser, das hier der Wärmeträger der Reaktionswärme ist, wird weiterhin als Abwärmestrom A1 bezeichnet, der über eine Abwärmeleitung 6 abtransportiert wird. Der Abwärmestrom A1 beträgt unmittelbar nach dem Elektrolyseur 4 eine Temperatur zwischen 60°C und 80°C, im gezeigten Ausführungsbeispiel 80°C. Zudem weist die Elektrolyseanlage einen Kühlkreislauf auf, umfassend mindestens einen Rückkühler 8 zur Regulierung der Temperatur im Elektrolyseur 4. Der Rückkühler 8 ist hierbei vorzugsweise ein Tischkühler zum Abkühlen von erwärmtem Prozesswasser.

Erfindungsgemäß umfasst die Elektrolyseanlage 2 weiterhin eine integrierte Absorptionskältemaschine 10, mit deren Hilfe aus dem Abwärmestrom A1 ein Kältestrom K1 erzeugt wird, der im gezeigten Ausführungsbeispiel zur Kühlung des Elektrolyseurs 4 eingesetzt wird. Der Kältestrom K1 weist eine Temperatur zwischen 5°C und 15°C auf. Im Ausführungsbeispiel gemäß FIG 1 beträgt die Temperatur des Kältestroms K1 10°C.

Unter Absorptionskältemaschine 10 wird hierbei eine thermisch angetriebene Kältemaschine verstanden, bei der ein Kältemittel in einem Lösungsmittelkreislauf bei geringer Temperatur in einen zweiten Stoff absorbiert und bei höheren Temperaturen resorbiert wird. Bei einer Absorptionskältemaschine wird dabei die Temperaturabhängigkeit der physikalischen Löslichkeit des Kältemittels und des Lösungsmittels genutzt. Die Absorptionskältemaschine 10 ist beispielsweise eine Wasser-Lithiumbromid-Absorptionskältemaschine. Alternativ kann für die Erzeugung des Kältestroms K eine Ammoniak-Wasser-Absorptionskältemaschine eingesetzt werden.

Der in der Absorptionskältemaschine 10 erzeugte Kältestrom K1 wird über eine Kälteleitung 12 zum Elektrolyseur 4 zurückgeführt. Der Kältestrom K1 ist hierbei beispielsweise über den Rückkühler 8 mit dem Kühlkreislauf 7 des Elektrolyseurs 4 gekoppelt.

Gemäß der in der FIG 1 gezeigten Ausführung der Elektrolyseanlage 2 sind zudem ein zusätzlicher Rückkühler 14 sowie ein Umschaltventil 13 vorgesehen. Durch das Umschaltventil 13 wird der Abwärmestrom A1 entweder durch den in der Elektrolyseanlage 2 integrierten Rückkühler 8 oder durch die Absorptionskältemaschine 10 und den zweiten Rückkühler 14 geleitet. Wenn das Umschaltventil 13 derart eingestellt ist, dass der Abwärmestrom A1 der Absorptionskältemaschine 10 zugeführt wird, würde er z.B. um 20°C bis 40°C abgekühlt zum Elektrolyseur 4 zurück gelangen. Für die Funktionsfähigkeit der Absorptionskältemaschine 10 wird der weitere Rückkühler 14 benötigt, der mit einem zweiten Abwärmestrom A2 beaufschlagt wird.

Solange die Absorptionskältemaschine 10 betrieben wird, d.h. solange das Umschaltventil 13 den Abwärmestrom A1 zur Absorptionskältemaschine 10 leitet, ist der Rückkühler 8 außer Betrieb. Mit dem Kältestrom K1 kann ein Kältespeicher 15 über eine Leitung 12 geladen werden. Wird die Absorptionskältemaschine 10 abgestellt, so dass das Umschaltventil 13 den Abwärmestrom A1 zum Rückkühler 8 leitet, kann aus dem Kältespeicher 15 der Kältestrom K1 zur besonders effektiven Kühlung des Rückkühlers 8 herangezogen werden.

Durch die Aufteilung des Kühlkreislaufs 7 in zwei Abwärmestromabnehmer 8 und 14, kann die Kühlung besonders effektiv ausgelegt werden. Vor allem der Rückkühler 8 kann unter Nutzung des Kältestroms K1 besonders klein ausgelegt werden. Ergänzend oder alternativ ist außerdem eine externe Kühlquelle 17 für den Rückkühler 8 vorgesehen.

Im Ausführungsbeispiel gemäß FIG 1 wird zudem ein zweiter Kältestrom K2 mit einer Temperatur von ca. 9°C aus der Absorptionskältemaschine 10 hinausgeleitet oder abgezweigt, der einem Kältenetz 16 zugeführt wird. Eine noch niedrigere Temperatur als die gemäß FIG 1 erreichte Temperatur von 9°C lässt sich durch einen zwei- oder mehrstufigen Betrieb der Absorptionskältemaschine 10 erreichen.

Vom Kältenetz 16 aus gelangt der zweite, noch kältere Kältestrom K2 in eine Gebäudeinfrastruktur, wo er zu Klimatisierungszwecken eingesetzt wird. Eine Nutzung der in der Absorptionskältemaschine 10 generierte Kälte für externe Vorrichtungen, die kein Teil der Elektrolyseanlage 2 sind, ist lediglich optional und hängt insbesondere von der Menge an erzeugter Kälte ab. Denkbar ist jedoch auch, dass der gesamte Kältestrom, der in der Absorptionskältemaschine 10 erzeugt wird, zu externen Kälteabnehmern außerhalb der Elektrolyseanlage geleitet wird. Mit Hilfe des zweiten Kältestroms K2 kann beispielsweise eine Wasserstoff-Tankstelle 18, ein Büroraum 20 oder Lebensmittel in einer Kühl- und Gefriereinrichtung 22 gekühlt werden.

In FIG 2 ist eine zweite Ausführungsvariante gezeigt, bei der lediglich ein Rückkühler 9 vorgesehen ist. Das Ventil 24 ist hierbei ein Regelventil, welches den Abwärmestrom A1 in zwei Abwärmeströme A11 und A12 aufteilen kann. Je nach Prozessparameter und Kältebedarf kann somit reguliert werden, wie groß der Anteil A12 des Abwärmestroms A1 ist, der direkt dem Rückkühler 9 zugeführt wird und welcher Anteil A11 über die Absorptionskältemaschine 10 in Kälte gewandelt wird. Die Stromanteile A11 und A12 können jeweils zwischen 0% und 100% des Abwärmestroms A1 betragen und zeitlich variiert werden.

Mit der Elektrolyseanlage 2 wird die Abwärme aus dem Elektrolyseprozess genutzt, um Kälte zu erzeugen, welche Kälte innerhalb der Elektrolyseanlage 2 oder extern zu Kälte- oder Klimatisierungszwecken vielfältig eingesetzt werden kann. Durch die direkte Kühlung des Prozesswassers wird eine besonders hohe Kühleffizienz erreicht, da kein weiterer Wärmeträger erforderlich ist.

## Patentansprüche

1. Elektrolyseanlage (2) umfassend einen Elektrolyseur (4) zur Erzeugung von Wasserstoff und Sauerstoff, eine Abwärmeleitung (6) zum Abführen eines im Elektrolyseprozess erzeugten Abwärmestroms (A1) aus dem Elektrolyseur (4), sowie einen Kühlkreislauf (7) mit mindestens einem Rückkühler (8, 9) zur Regulierung des Temperaturniveaus des Elektrolyseurs (4), **dadurch gekennzeichnet, dass** mindestens eine Absorptionskältemaschine (10) zur Erzeugung von einem Kältestrom (K1) aus dem Abwärmestrom (A1) an der Abwärmeleitung (6) angeordnet ist.

2. Elektrolyseanlage (2) nach Anspruch 1,
**dadurch gekennzeichnet, dass** der in der Absorptionskältemaschine (10) erzeugte Kältestrom (K1) über eine Kälteleitung (12) mit dem Elektrolyseur (4) strömungstechnisch gekoppelt ist.

3. Elektrolyseanlage (2) nach einem der vorhergehenden Ansprüche,
**dadurch gekennzeichnet, dass** der Kältestrom (K1) mit dem Kühlkreislauf (7) des Elektrolyseurs (4) strömungstechnisch verbunden ist.

4. Elektrolyseanlage (2) nach einem der vorhergehenden Ansprüche,
**dadurch gekennzeichnet, dass** der Kühlkreislauf (7) einen zweiten Rückkühler (14) umfasst.

5. Elektrolyseanlage (2) nach einem der vorhergehenden Ansprüche,
**dadurch gekennzeichnet, dass** der Abwärmestrom (A1) durch Prozesswasser aus dem Elektrolyseur (4) gebildet ist.

6. Elektrolyseanlage (2) nach einem der vorhergehenden Ansprüche,
**dadurch gekennzeichnet, dass** der Abwärmestrom (A1) eine Temperatur zwischen 60°C und 80°C beträgt.

7. Elektrolyseanlage (2) nach einem der vorhergehenden Ansprüche,
**dadurch gekennzeichnet, dass** der Kältestrom (K1) eine Temperatur im Bereich 5°C bis 15°C beträgt.

8. Verfahren zum Betreiben einer Elektrolyseanlage (2) umfassend einen Elektrolyseur (4) zur Erzeugung von Wasserstoff und Sauerstoff, eine Abwärmeleitung (6) zum Abführen eines im Elektrolyseprozess erzeugten Abwärmestroms (A1) aus dem Elektrolyseur (4), sowie einen Kühlkreislauf (7) mit mindestens einem Rückkühler (8, 9) zur Regulierung des Temperaturniveaus des Elektrolyseurs (4),
**dadurch gekennzeichnet, dass** der Abwärmestrom (A1) einer Absorptionskältemaschine (10) zugeführt wird und in der Absorptionskältemaschine (10) ein Kältestrom (K1) erzeugt wird.

9. Verfahren nach Anspruch 8,
**dadurch gekennzeichnet, dass** der Kältestrom (K1) dem Elektrolyseur (4) zugeführt wird.

10. Verfahren nach Anspruch 8 oder 9,
**dadurch gekennzeichnet, dass** der Kältestrom (K1) in den Kühlkreislauf (7) hineingeleitet wird.

11. Verfahren nach Anspruch 10,
**dadurch gekennzeichnet, dass** der Kühlkreislauf (7) einen zusätzlichen Rückkühler (14) umfasst und der Kältestrom (K) dem zusätzlichen Rückkühler (14) zugeführt wird.

12. Verfahren nach einem der Ansprüche 8 bis 11,
**dadurch gekennzeichnet, dass** der Abwärmestrom (A1) durch Prozesswasser aus dem Elektrolyseur (4) gebildet wird.

13. Verfahren nach einem der Ansprüche 8 bis 12,
**dadurch gekennzeichnet, dass** der Abwärmestrom (A1) mit einer Temperatur zwischen 60°C und 80°C aus dem Elektrolyseur (4) abgeleitet wird.

14. Verfahren nach einem der Ansprüche 8 bis 13,
**dadurch gekennzeichnet, dass** der Kältestrom (K1) mit einer Temperatur im Bereich 5°C bis 15°C aus der Absorptionskältemaschine hinausgeleitet wird.
